# EUROPÄISCHE PATENTSCHRIFT

(11) **EP 1 168 129 B1**
(45) Veröffentlichungstag und Bekanntmachung des Hinweises auf die Patenterteilung: **15.12.2004**
(21) Anmeldenummer: 01000250.9
(22) Anmeldetag: 25.06.2001
(51) Int. Cl.: G05B 19/414, G06F 9/30

(54) **Mikrocontroller mit variabler Befehlsdekodierung**
Microcontroller with variable instruction decoding
Microcontrôleur avec décodage variable d'instructions

(30) Priorität: 27.06.2000 DE 10031223
(43) Veröffentlichungstag der Anmeldung: 02.01.2002
(73) Patentinhaber: Philips Intellectual Property & Standards GmbH, 20099 Hamburg (DE); Koninklijke Philips Electronics N.V., 5621 BA Eindhoven (NL)
(72) Erfinder: Müller, Detlef, c/o Philips Corp. Int. Prop. GmbH, 52064 Aachen (DE)
(74) Vertreter: Volmer, Georg, Dipl.-Ing.

(56) Entgegenhaltungen:
- WO-A-86/07174
- WO-A-90/02995
- US-A- 6 052 773

## Beschreibung

Die Erfindung betrifft einen Mikrocontroller mit einem Befehlsdecodierer.

Als Mikrocontroller werden Einchip-Mikrocomputer bezeichnet, die in der Regel zur Steuerung von Geräten verwendet werden und bei denen CPU, Speicher und Ports auf einem Chip integriert sind. Die CPU enthält dabei in bekannter Weise einen Befehlsdecodierer, welcher die geladenen Befehle decodiert und eine Ablaufsteuerung vornimmt, damit die Befehle von der Recheneinheit ausgeführt werden.

Die Programmierung von Mikrocontrollern erfolgt in einer maschinenabhängigen Assembler Sprache. Bei den bekannten Assembler Sprachen werden dabei mit Ausnahme der bedingten Programmsprünge alle Assemblerbefehle unabhängig von Daten ausgeführt. Wenn daher in Abhängigkeit von bestimmten Daten unterschiedliche Operationen ausgeführt werden sollen, ist dies bei herkömmlichen Mikrocontrollern nur mit erheblichem Programmieraufwand möglich. Dabei muß die auszuführende Bedingung umständlich in Assembler codiert werden. Wenn zum Beispiel generische Pointer in einem Hochsprachencompiler je nach dem adressierten Speicher mittels unterschiedlicher Assemblerbefehle programmiert werden sollen, erfordert dies einen hohen Programmieraufwand oder ersatzweise einen erheblichen Hardwareaufwand zur Speicherumkonfiguration

Aus der Druckschrift US 6 052 773 A sind ein Einchip-Mikroprozessor oder ein Speicherbaustein mit programmierbaren Eigenschaften bekannt. Für den Mikroprozessor ist eine feste Datenverarbeitungszelle vorgesehen, wie sie zur Durchführung logischer Berechnungen üblich ist. Ein Teil der Halbleiterschaltung auf dem Chip ist als programmierbares Gatterfeld ausgebildet. Dies ermöglicht anwendungsspezifische Konfigurationen und erlaubt damit eine Anpassung an bestimmte, sich zeitlich ändernde Anforderungen an den Mikroprozessor, so daß der Mikroprozessor diese Anforderungen bestmöglich erfüllen kann.

In dem aus der Druckschrift US 6 052 773 A bekannten Mikroprozessor ist ein rekonfigurierbares Feld enthalten, welches als rekonfigurierbarer Dekoder für einen Befehlszwischenspeicher dient. Insbesondere liefert ein Programmzähler Befehlsadressen an den Befehlszwischenspeicher. Die Befehle werden dem rekonfigurierbaren Feld zugeleitet, welches als rekonfigurierbarer Dekoder eingerichtet ist. Das rekonfigurierbare Feld interpretiert den Befehlsstrom, steuert dabei die Ausführung und nimmt so den Platz eines festen Dekoders ein.

Wahlweise kann in dem aus der Druckschrift US 6 052 773 A bekannten Mikroprozessor das rekonfigurierbare Feld den Befehl in eine Folge primitiver Operationen umwandeln und deren Fluß durch den Mikroprozessor steuern. Dies gleicht im wesentlichen dem traditionellen Mikrocode, außer daß die Steuerung mehr in dem rekonfigurierbaren Feld als in einem Mikrocode-PROM verwirklicht ist.

In einem Hybridschema in dem aus der Druckschrift US 6 052 773 A bekannten Mikroprozessor erzeugt das rekonfigurierbare Feld nur einen Teil der Steuersignale. Das flexible bzw. festverdrahtete Schema stellt direkte Pfade für gemeinsame Operanden zur Verfügung, wie Registeradressen, wohingegen das rekonfigurierbare Feld eine vollständige Kontrolle über die Befehlsinterpretation und die Steuersignale ausübt.

In dem aus der Druckschrift US 6 052 773 A bekannten Mikroprozessor können die Befehle beim Einspeichern in den Befehlszwischenspeicher auch aus einer komprimierten, speicherplatzparenden Form in eine ausgedehntere, leichter bearbeitbare Form überführt werden. Die auf diese Weise dekomprimierten, vom Befehlszwischenspeicher abgegebenen Befehle steuern unmittelbar die auf dem Chip befindlichen Bauteile.

Eine flexible Befehlsinterpretation erlaubt es, den Mikroprozessor an ein effizientes Dekodieren und Ausführen von Befehlen anzupassen. Die flexible Logik dekodiert den bereitgestellten Befehlsstrom und wandelt ihn in Steuerstrukturen für den Mikroprozessor um. Im allgemeinen kann dies z.B. eine Ausdehnung einiger Befehle in Vielfachoperationen auf dem Kernprozessor erfordern.

Ferner können die Befehle durch das rekonfigurierbare Feld an die Anwendung angepaßt werden. Dies kann ausgenutzt werden, um ausführbare Anweisungen durch Anpassung der Befehlskodierung an den Gebrauch der Befehle bei der Anwendung zu komprimieren.

Die spezielle Befehlskodierung ergänzt andere rekonfigurierbare Strukturen, wie sie in der Druckschrift US 6 052 773 A genannt werden, und erlaubt eine Anpassung des Befehlsstroms daran, neuen Befehlen und Funktionen Platz zu bieten, die durch das rekonfigurierbare Feld ermöglicht werden.

Aus der Druckschrift WO 86147174 A ist ein Rechnersystem bekannt, in welchem die Befehlsfolge sich unter der Steuerung eines Programmsteuerrechners befindet, jeder einzelne Befehl zur Ausführung jedoch einem individuellen Befehlsrechner aus einer Reihe von Befehlsrechnern zugeordnet wird. Jeder Befehlsrechner enthält eine programmierbare Befehlsdekodereinheit, durch deren Abwandlung die Mikrobefehle, die zur Ausführung eines Befehls vorgenommen werden, entsprechend modifizierbar sind, und zwar entweder zwischen aufeinanderfolgenden Befehlszyklen oder während eines einzigen Befehlszyklus. Dadurch gewinnt das System die Fähigkeit, während der Ausführung eines Programms zu lernen und sich anzupassen. Das System kann zu zwei- und dreidimensionalen Feldern erweitert werden, um eine Vervielfachung der Rechenleistung zu erhalten und Vorteile von Redundanzen ausnutzen zu können.

Ein bevorzugtes Merkmal der in der Druckschrift WO 86/07174 A beschriebenen programmierbaren Befehlsdekodereinheit ist ihre Programmierbarkeit. Das bedeutet, daß die Befehlsdekodereinheit rekonfiguriert werden kann, um unterschiedliche Sätze von Signalen an eine Mikrobefehlsgeneratoreinheit abzugeben, wodurch ein vorgegebener Befehl während verschiedener Befehlszyklen unterschiedlich interpretiert und ausgeführt werden kann. Auf diese Weise kann die Befehlsdekodereinheit unter dem Einfluß äußerer Signale aus dem Programmsteuerrechner, aus einem Systemspeicher oder aus einem durch einen Programmierer beeinflußten Bedienpult rekonfiguriert werden. Aus internen Quellen kann die programmierbare Befehlsdekodereinheit durch Signale aus einer arithmetischen und logischen Einheit, einem internen Speicher oder der Mikrobefehlsgeneratoreinheit rekonfiguriert werden.

Damit kann die tatsächliche Interpretation und Ausführung eines von einem Befehlsrechner empfangenen Befehls von Befehlszyklus zu Befehlszyklus variiert werden; weiterhin kann die Konfiguration des Befehlsrechners während eines einzigen Ausführungszyklus als Resultat der Interpretation von Zwischenergebnissen oder aus anderen Gründen, die die Anpassung der genauen Ausführung des Befehls wünschenswert machen, modifiziert werden.

Vor diesem Hintergrund war es Aufgabe der vorliegenden Erfindung, einen Mikrocontroller der eingangs genannten Art hinsichtlich seiner Funktionalität und einer Vereinfachung der Programmierung weiter zu verbessern.

Diese Aufgabe wird durch einen Mikrocontroller mit den in Anspruch 1 angegebenen Merkmalen gelöst. Eine vorteilhafte Ausgestaltung ist im Unteranspruch angegeben.

Der Mikrocontroller enthält demnach einen Befehlsdecodierer sowie mindestens einen Speicher, auf welchen der Befehlsdecodierer unmittelbar Zugriff hat. Der Befehlsdecodierer ist zur Decodierung mindestens eines bedingten Befehls eingerichtet, wobei das Ergebnis der Decodierung des bedingten Befehls vom Inhalt des Speichers abhängt, auf welchem der Decodierer Zugriff hat. Wenn der Befehlsdecodierer somit einen bedingten Befehl lädt, überprüft er den Inhalt des Speichers, auf den er Zugriff hat, und gibt in Abhängigkeit vom Ergebnis dieser Überprüfung einen Maschinenbefehl aus einer Reihe von möglichen Maschinenbefehlen, die zu dem geladenen bedingten Befehl gehören, an die Recheneinheit weiter. Bei dem Speicher, auf den der Mikrocontroller Zugriff hat, kann es sich insbesondere um ein Register handeln, welches auf dem Mikrocontroller vorhanden ist.

Der erfindungsgemäße Mikrocontroller erlaubt durch seine Arbeitsweise eine erheblich größere Flexibilität beim Einsatz und bei der Programmierung, ohne daß hierzu weitreichende Änderungen am Aufbau der Hardware notwendig wären. Ein bedingter Befehl läßt sich in gleicher Weise wie herkömmliche Assemblerbefehle beim Programmieren verwenden. Bei der Ausführung des Programmcodes gewährleistet er indes eine größere Flexibilität, da die tatsächlich ausgeführte Instruktion von den zum Zeitpunkt der Ausführung in dem Speicher, auf den der Befehlsdecodierer Zugriff hat, vorliegenden Daten abhängt.

Gemäß der Erfindung ist der Befehlsdecodierer so eingerichtet, daß der bedingte Befehl je nach Inhalt des Speichers, auf welchen der Befehlsdecodierer Zugriff hat, als Zugriffsbefehl für die Recheneinheit auf verschiedene Speichertypen decodiert wird. Der Zugriff auf verschiedene Speichertypen ausgehend von demselben bedingten Befehl ist eine häufig vorkommende Anwendungssituation, bei welcher sich die erfindungsgemäße Ausgestaltung des Mikrocontrollers besonders vorteilhaft bemerkbar macht. In zahlreichen Mikrocontrollern gibt es unterschiedliche Assemblerbefehle zum Zugriff auf verschiedene Speicher. Zum Beispiel gibt es für den Mikrocontroller 80C51 den Befehl "mov" für das Bewegen von data memory Daten sowie dem Befehl "movc" für code memory Daten. Ein generischer Pointer (zum Beispiel in der Hochsprache C), der adreßgesteuert auf den gesamten implementierten Speicher zugreifen kann, ist für derartige Mikrocontroller entweder nur mit erheblichem Aufwand an Assemblercode oder mit zusätzlichen Hardware-unterstützten Memorykonfigurationen (memory mapping) möglich. Im Gegensatz hierzu erlaubt die Implementation eines datengesteuerten, bedingten Befehls mit einem einzigen Programmbefehl den Zugriff auf alle implementierten Datenspeicher, da die jeweils gewünschte Instruktion in Abhängigkeit von den Daten, zum Beispiel abhängig vom Inhalt eines Prozessorregisters als Pointer, decodiert wird. Nach außen hin wirkt diese Operation, als ob sie auf einen linearen Speicher zugreifen würde. Ein großer Vorteil ist daher, daß zum Beispiel vorhandene Memory Management Units trotz virtueller Umkonfiguration des Speichers völlig unverändert genutzt werden können.

Der Speicher, auf den der Befehlsdecodierer Zugriff hat, ist vorzugsweise so eingerichtet, daß er Eingangsdaten des Mikrocontrollers enthalten kann. Eingangsdaten des Mikrocontrollers können insbesondere digitale oder digitalisierte Informationen sein, welche von einem angeschlossenen Gerät geliefert werden.

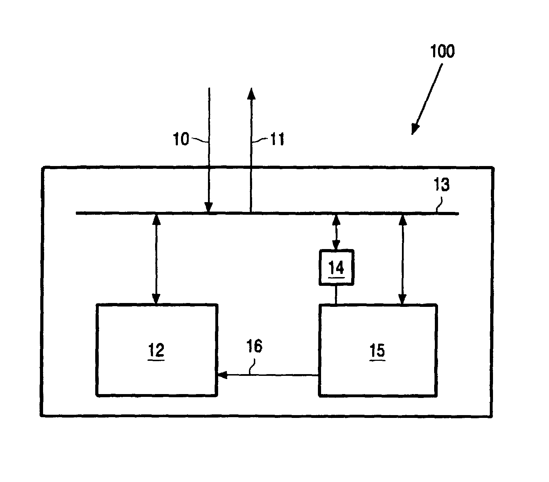

Die einzige Figur zeigt schematisch die Elemente eines erfindungsgemäßen Mikrocontrollers 100.

Von dem stark vereinfacht dargestellten Mikrocontroller 100 sind als logische Bausteine nur die arithmetisch-logische Recheneinheit ALU 12 sowie der Befehlsdecodierer 15 dargestellt. Die ALU 12 und der Befehlsdecodierer 15 sind an einen gemeinsamen Bus 13 angeschlossen, an welchem auch die Eingänge 10 und Ausgänge 11 des Mikrocontrollers liegen. Femer hat der Befehlsdecodierer 15 eine direkte Verbindung 16 zur ALU 12, über welche die Ablaufsteuerung vorgenommen wird.

Erfindungsgemäß hat der Befehlsdecodierer 15 direkten Zugriff auf einen Speicher 14, bei dem es sich zum Beispiel um ein Register des Mikrocontrollers handeln kann. In den Speicher 14 können Daten unterschiedlicher Herkunft geladen werden, zum Beispiel Daten aus einem Eingang 10 des Mikrocontrollers.

Der Befehlsdecodierer 15 ist so eingerichtet, dass er bedingte Befehle ausführen kann. Bei einem bedingten Befehl wählt der Befehlsdecodierer 15 in Abhängigkeit vom Inhalt des Speichers 14 einen von mehreren zugehörigen Maschinenbefehlen aus und überträgt diesen zur ALU 12. Beispielsweise kann der Befehlsdecodierer in Abhängigkeit vom Inhalt des Speichers 14 den Befehl mov oder den Befehl movc an die ALU übertragen. Ausgangspunkt ist jedoch in beiden Fällen derselbe bedingte Asemblerbefehl, so dass diesbezüglich bei der Programmierung nicht unterschieden werden muss. Mit dem erfindungsgemäßen Mikrocontroller ist es somit möglich, den Programmieraufwand erheblich zu verringem und damit sowohl die Systemperformance als auch die Codedichte mit geringem zusätzlichen Hardwareaufwand signifikant zu steigern.

### Bezugszeichen:

- 100: Mikrocontroller
- 10: Eingangsleitung
- 11: Ausgangsleitung
- 12: Recheneinheit
- 13: Bus
- 14: Speicher
- 15: Befehlsdecodierer
- 16: Leitung

## Patentansprüche

1. Mikrocontroller (100) mit einem Befehlsdecodierer (15) sowie mindestens einem Speicher (14), auf welchen der Befehlsdecodierer Zugriff hat, wobei der Befehlsdecodierer derart zur Decodierung mindestens eines bedingten Befehls eingerichtet ist, daß das Ergebnis der Decodierung des bedingten Befehls vom Inhalt des genannten Speichers abhängt,
**dadurch gekennzeichnet,**
**daß** der Befehlsdecodierer (15) so eingerichtet ist, daß ein bedingter Befehl je nach Inhalt des Speichers (14), auf den der Befehlsdecodierer Zugriff hat, als Zugriffsbefehl für die Recheneinheit (12) auf verschiedene Speichertypen decodiert wird.

2. Mikrocontroller nach Anspruch 1,
**dadurch gekennzeichnet,**
**daß** der Speicher (14), auf den der Befehlsdecodierer Zugriff hat, so eingerichtet ist, daß er Eingangsdaten des Mikrocontrollers enthalten kann.

## Claims

1. A microcontroller (100) comprising a command decoder (15) and at least one memory (14) to which the command decoder has access, the command decoder being adapted to decode at least one conditional command, such that the result of the decoding of the conditional command is dependent on the contents of said memory, **characterized in that** the command decoder (15) is adapted in such a way that, dependent on the contents of the memory (14), to which the command decoder has access, a conditional command is decoded as an access command for the computer (12) to different memory types.

2. A microcontroller as claimed in claim 1, **characterized in that** the memory (14), to which the command decoder has access, is adapted in such a way that it can include input data of the microcontroller.

## Revendications

1. Microcontrôleur (100) avec un décodeur d'instructions (15) ainsi qu'au moins une mémoire (14) à laquelle le décodeur d'instructions a accès, le décodeur d'instructions étant conçu pour le décodage d'au moins une instruction conditionnelle de telle sorte que le résultat du décodage de l'instruction conditionnelle dépende du contenu de ladite mémoire, **caractérisé en ce que** le décodeur d'instructions (15) est conçu de telle sorte qu'une instruction conditionnelle soit décodée comme instruction d'accès pour l'unité de calcul (12) à différents types de mémoire en fonction du contenu de la mémoire (14) à laquelle le décodeur d'instructions a accès.

2. Microcontrôleur selon la revendication 1, **caractérisé en ce que** la mémoire (14) à laquelle le décodeur d'instructions a accès est conçue de telle sorte qu'il puisse contenir les données d'entrée du microcontrôleur.
